# EUROPEAN PATENT SPECIFICATION

(11) **EP 2 462 184 B1**
(45) Date of publication and mention of the grant of the patent: **16.07.2014**
(21) Application number: 10806095.5
(22) Date of filing: 09.08.2010
(51) Int. Cl.: C08J 5/00, E04B 1/76, C08L 1/00, C08L 97/02, D04H 1/425, D04H 1/541

(54) **WOOD FIBER BASED INSULATION PRODUCT AND METHOD OF PRODUCING THE SAME**
ISOLIERUNGSPRODUKT AUF HOLZFASERBASIS UND VERFAHREN ZU SEINER HERSTELLUNG
PRODUIT D ISOLATION À BASE DE FIBRES DE BOIS ET SON PROCÉDÉ DE FABRICATION

(30) Priority: 07.08.2009 FI 20095827
(43) Date of publication of application: 13.06.2012
(73) Proprietor: Ekovilla OY, 45720 Kuusankoski (FI)
(72) Inventor: LOUKO, Reijo, FI-45720 Kuusankoski (FI); AHONEN, Heikki, FI-33720 Ritvala (FI)
(74) Representative: Seppo Laine Oy
(86) International application number: PCT/FI2010/050621
(87) International publication number: WO 2011/015714

(56) References cited:
- US-A- 5 516 580

## Description

The present invention relates to wood fibre-based insulators. The present invention relates especially to a thermal insulator according to the preamble of Claim 1.

A natural fibre-based thermal insulator such as this is designed for thermal insulation of buildings, and it generally comprises fibre material which constitutes organic fibre and possibly synthetic binding fibre, and boron-bearing flame retardants and mould retardants.

The present invention also relates to a method of manufacturing a thermal insulator, according to the preamble of Claim 15.

All of the commercial thermal insulators on the market have either a fibrous or a cellular structure, in which the purpose of the fibres and the cells is to keep the air inside the insulator as dormant as possible.

Of all the trees in Finland, the fastest to grow is generally the aspen, which has short and thin fibres and very few extractives, which generate odours in buildings. For a long time, aspen was disliked because of its short fibres. Today, aspen is used in paper manufacturing because it has a particularly light colour and it keeps that lightness for a long time.

Problematic of fibrous organic thermal insulators used to be that they go mouldy and may catch fire, problems which were eliminated already decades ago by mixing boric acid and borax among the fibres, in which case such a thermal insulator resists mould better than, for instance, rock wool (VTT publication 791, 1994).

Another problem which has to be solved is how to treat a fibre insulator in such a way that it prevents the insulator from collapsing. This has been discussed in, among others, EP patent specification 0 694 094, according to which publication some of the boron compounds are anhydrous during the mixing stage and when they absorb crystal water they bind the fibres to each other. The same problem has been further discussed in FI patent 109709, and also briefly discussed in FI patent 110869 and in AU patent application 574389, the aqueous solutions of the additives being neutral in the former and alkaline in the latter.

Polymer fibres which are meltable when heated, such as two-component polymer fibres, the surfaces of which are meltable when heated, have recently been increasingly used as a binder in fibre insulators. Such "BiCO fibres" have earlier been used for instance in non-woven materials (US patent 4 889 764). Typically, BiCO fibres comprise a thermoplastic matrix fibre, such as polyester fibre, the surface of which carries a copolymer that melts at a lower temperature. This coating polymer binds the wood fibres together.

An example of the known technology is a solution described in US-published patent application 200500214537, in which the binder of a wood fibre-based insulating material is a two-component fibre or granule material, the surface of which is meltable when heated. The core is pearlite or thermoplastic. US-published patent application 2009068430, as well, describes a wood fibre-based insulating material, which comprises, besides fire retardants, also BiCO fibres. These fibres are biodegradable, such as CMC, PVA or caprolactam, and biodegradable polyethene.

The known solutions cannot be used to solve the problems associated with the collapsing of a fibre insulator.

The purpose of the present invention is to solve problems associated with the known technology and to generate a completely new solution that is a natural fibre-based thermal insulator, in which polymer fibres are used as the binder.

Associated with the present invention it has been found that the length of two- or several component binding fibres is very significant for the eventual settling of the wood fibre insulator. In addition, the fact that the fibres are curved or curly has a significant effect on the creation of contact points. In fact, in the present invention we have found that the contact points of the binding fibres attach by melting onto the wood fibre or thin wood chip, which means that the curvier and longer the binding fibres are, the easier it is to generate binding contacts, and more are generated, too.

According to the present invention, at least part of the binding material in the wood fibre-based insulating material comprises binding fibres which contain polymer material that melts at two different temperatures, in which case the average length of the binding fibres is at least 10 times longer than the average length of the wood fibres in the insulator. Preferably, the length of the binding fibres is approximately 30-50 mm.

More specifically, the thermal insulator according to the present invention is characterized by what is stated in the characterizing part of Claim 1.

The method according to the present invention is, in turn, characterized by what is stated in the characterizing part of Claim 15.

Considerable advantages are achieved by means of the invention. Accordingly, in our mill tests we have discovered that with one fibre it is possible to bind together 3-dimensionally a significant amount of wood fibres or fine chips or corresponding vegetable fibrous material of the insulator. Consequently, a wood fibre insulator which is bound in this way is flexible and restored to its former shape much better than an insulating mat bound in some other way.

In the following, the present invention will be examined more closely with the aid of a detailed description.

The thermal insulator according to the present invention is mainly designed for thermal insulation of buildings. It includes fibre material which comprises organic fibre, such as wood fibre, and synthetic binding fibre, and typically flame retardants and mould retardants especially boron-bearing flame retardants and mould retardants. Furthermore, the thermal insulator comprises most suitably a neutralising component, such as carbonate.

As described above, the natural fibres, such as wood fibres or cellulose fibres, are bound together by means of a synthetic fibre material. Preferably, a two-component fibre is used, the surface of which fibre comprises a polymer which melts at a low temperature, and the core of which is a polymer that has a higher melting point than the surface layer polymer. An example is a polymer having a melting point of approximately 110-160 °C at the surface of the fibre and a melting point of the core polymer substantially higher than 160 °C, especially 200 °C or higher.

Typically, the polymer comprises thermoplastic, such as polyolefin or polyester or polyamide.

Examples of suitable bicomponent fibres are PET fibres (polyethylene-terephthalate fibres), which are coated with a copolymer that melts at a lower temperature (BiCo fibres /Trevira GmbH). This coating, with a lower melting point, of the polymer fibre binds the wood fibres to each other. The coating comprises for instance a polyester copolymer or polyolefin, both of which melt at a relatively low temperature. The melting temperature of the coating is at least approximately 50 °C, especially at least approximately 100 °C, lower than the melting temperature of the core layer.

The core fibre constitutes in general more than half of the cross section and half of the weight of a bicomponent fibre, typically approximately 60 % of the coating which melts at a low temperature. The cross section of the bicomponent fibres is generally approximately 1-10 denier (approximately 10-35 µm).

As described above, wood fibre insulators which comprise binding fibres are well-known in patent literature. In a case which is described in US-published patent application 2009/0068430 A1, the fineness of a melting fibre is 10 dtex and its length less than 20 mm.

Differing from previously known technology, in the present invention, the binding fibres are fairly long, typically their average length is at least 10 times longer than the length of the organic fibres in fibre compositions. In particular, the average length of binding fibres is at least 30 mm, most suitably approximately 30-50 mm, in which case one fibre is capable of binding numerous wood fibres into one binder chain.

In principle, any fibre, at least the surface of which melts at a reasonably low temperature, and which fulfils the length criterion described above, is suitable as a binding fibre.

Furthermore, characteristic of our product is that it comprises a polymeric two-component fibre, which is curved and curly before it is mixed into the fibres, and which is straightened to at least double its length when it is stretched. A more preferable material that fulfils this criterion is a binding fibre, which is marketed under the trademark of Trevira 254, and the standard factory-delivered length of which is 50 mm and thickness 4.4 dtex. However, during our experiments, we discovered that the fibre length is approximately 40 mm ±10 mm. The fibres comprised on average 10-20 curves and their unstretched length was about half of their extended length. We have estimated that with one fibre it is possible to bind together 3-dimensionally approximately 5-15 wood fibres or fine chips. Consequently, a wood fibre insulator that is bound in this way is flexible and it is restored to its original shape much better than an insulating mat which is bound in any other way.

Preferably, the amount of binding fibre used is than 50 weight-% of the total amount of the fibre matrix, more preferably the binding fibre amount is approximately 2-20 weight-%, of the weight of the wood fibre.

In addition, the present fibre insulator comprises most suitably alkaline earth metal carbonate as a neutralising component. An advantage of this solution is that the carbonates, which previously have not been used together with wood fibre insulators as a means of protecting iron metals against corrosion, provide such neutralising protection for decades. It should be noted that acidic compounds are secreted not only from insulators but also from other wooden components of a building, and that the carbonates installed in the fibre insulator neutralise these acidic organic compounds, too. Examples of such acidic organic compounds are formic acid, acetic acid, oxalic acid and lactic acid. In the present invention, the carbonates buffer the pH value of the insulator rendering it neutral or slightly alkaline, in which case it is possible to use the fibre insulator together with structural components which include iron metals, without any danger of corrosion.

The percentage of the carbonate component is preferably approximately 0.1-5 % of the total weight of the insulator.

Preferably, the alkaline earth metal carbonate is calcium carbonate, magnesium carbonate or a mixture thereof. It can also be carbonate mineral, such as dolomite, which comprises calcium and magnesium ions. In the present invention, the terms used for these materials are "carbonate" or "carbonate material".

In fibre insulators, carbonate material is generally used together with boron-bearing materials. Examples of these are boric acid [B(OH)₃], its hydrates, its esters and its salts. Examples of these are borates, such as borax, i.e. dibasic sodium tetraborate, and calcium salts of boric acid (borocalcite, pandermite and boracite), and esters of boric acid, such as triethoxyborane. More preferably, borax, boric acid or a mixture thereof is at least partly used as a fire retardant.

Typically, borax and boric acid and mixtures thereof act as flame retardants and mould retardants. The independent FI Patent Nos. 110869 claims that, within wide percentage limits, an aqueous solution of borax and boric acid has a neutral pH value. Technically, this is inaccurate. Typically, the combined use of borax and boric acid makes up approximately 15 weight-% of the weight of the fibre material, in which case for instance the percentage of borax pentahydrate is 7 % and of boric acid 8 %. It is known that the pH value of pure boric acid is 5.1 (1-molar) and the pH value of a pure borax solution is 9.5. Preferably, the ratio between boric acid and Na-borate (borax) is such that already in that case the pH value of their aqueous solution is slightly alkaline. This is achieved when the weight ratio of borax H₂O/boric acid exceeds 7 : 8. When the mixture comprises borax (as pentahydrate) and boric acid 5-15 weight-% of the fibre quantity, its pH value is between 7.9 and 8.2, i.e. it is slightly alkaline.

In that case, the fibre composition comprises approximately 1-30 weight-%, especially approximately 5-15 weight-% of boron-bearing materials.

Carbonate material buffers the pH value which is produced by the boron compounds, in which case the pH value of the fibre insulator remains neutral even for extended periods of time. Carbonates, such as calcium and magnesium carbonate, do not change the pH value because of their low solubility, but they react immediately with acidic compounds and keep the pH value constant. The risk of corrosion of iron nails, nail plates and other fasteners will be eliminated for decades.

The most advantageous neutral buffering material is calcium carbonate, either refined (GCC) or precipitated (PCC).

The amount of carbonates (Ca carbonate, Mg carbonate or dolomite powder, or other material comprising Ca/Mg carbonate) needed is very small, typically approximately 0.01-10 %, especially approximately 0.1-5.0 % of the weight of the wood insulation wool. There are also other ways to bring the carbonate minerals into the insulator than by separate mixing of the particles. The coating and the filler of many magazines (increasingly) comprise either refined calcium carbonate or precipitated calcium carbonate (PCC). If and when this fraction of a magazine is defibred into wood fibre or cellulose fibre insulators, the same effect is achieved. In fact, according to a preferable embodiment, fibre insulator is manufactured from recycled fibre, which is sourced from paper comprising carbonate as filler.

Preferably, the carbonate minerals are as fine-grained as possible, specifically precipitated calcium carbonates, which have an average particle size of 0.1-10 µm, or agglomerated forms of them, in which several small particles are bound to each other.

When calcium carbonates are heated they release carbon dioxide, in which case they protect against fire, as known per se, not only the boron compounds, but also the material and its surrounding. The fibre composition comprises approximately 0.1-10.0 weight-%, especially approximately 0.5-5.0 weight-% of alkaline earth metal carbonates.

As described above, according to a more preferable embodiment, the thermal insulation layer is protected against fire and protected against mould by means of a mixture of borax and boric acid, in such a way that the pH value of their aqueous solution is higher than 7, preferably approximately 7.9-8.2. At the same time, the quantity of Ca or Mg carbonates which are brought to the thermal insulator is 0.1-5.0 % of the weight of the fibre insulator. In addition it comprises 0.2 to 0.5 % of methyl cellulose or another cellulose derivative which is soluble in water.

In order to avoid separation of the carbonate material, it is bound to the fibres, i.e. to the fibre matrix. Because the thermal insulating mat is bound together by using polymer fibre material, it is naturally possible to attach the carbonate particles to the meltable surface layer of this fibre part by blowing dry carbonate material into hot air, the purpose of which air is to melt the surface layer of the binding fibres. The heat treatment for melting the polymer simultaneously removes the water from the aqueous solution of the cellulose derivatives and the boron compounds which are dissolved in water.

According to one preferable embodiment, the carbonate particles are further bound to the fibres with water-soluble polysaccharide polymers, such as carboxymethyl cellulose, methyl cellulose, ethyl cellulose, hydroxymethyl cellulose or a mixture of two or more of such polymers. According to another preferable embodiment, the binding is carried out by using an emulsion-polymer, such as polyvinyl acetate, styrene-butadiene latex or another latex which is emulsifiable in water. In a third preferable embodiment, the binding is carried out by melting the material which is on the surface of synthetic fibres, in which case the particles are bound to those fibres.

In order to mix the carbonate and the boron compounds with each other before they are added into the fibre matrix, it is preferable to introduce them as an aqueous solution/aqueous suspension. The quantity of solid matter in the suspension is approximately 0.1-50 %, preferably approximately 1-30 %, of the weight of the suspension. It is in particular possible to increase the viscosity of such a solution or suspension in particular at least partly by using a water-soluble polysaccharide polymer. Cellulose derivatives are exemplary viscosity increasers. Among these, the strangest is methyl cellulose, which remains dissolved in cold water but transforms into a solid state in hot water.

Carboxy-methyl cellulose (CMC), however, behaves normally: it dissolves in both cold and hot water and increases the viscosity. Increased viscosity helps distribute the fine-grained carbonate particles uniformly, when the additives, i.e. borax, boric acid and carbonate, are added into the wood fibres or cellulose fibres. As the mixture dries, the CMC or the CMC and the hydroxy-propyl cellulose together form a highly viscose mass, which binds the components onto the surface of the fibres. Correspondingly, ethyl cellulose, hydroxyethyl cellulose or hydroxymethyl ethyl cellulose can be used. All of these types decrease the surface tension of water from 72 dyn/cm to 45 dyn/cm (at a percentage of 0.05 %), which helps the surface of the fibres to absorb water and facilitates the spreading of additives onto the surface of the fibres. All water-soluble cellulose derivatives are chemicals that decrease the surface tension, a characteristic which facilitates their spreading onto the surface of the wood fibres.

According to one application, the aqueous suspension is stored at an elevated temperature and its temperature is lowered during the addition. More preferably, at least 10%, preferably approximately 30-100 %, as calculated from the weight, of the water-soluble cellulose derivative is methyl cellulose. The dispersion of cellulose derivative and carbonate is stored at a temperature of approximately 65-80 °C, in which case its viscosity prevents the solid matter of the dispersion from settling. In that case, the temperature of the dispersion is lowered for instance to approximately 40-25 °C during the addition.

Regarding the carbonate materials, it should be noted here that technically the most suitable carbonate is precipitated calcium carbonate (PCC), the particle size of which is sufficiently small to allow the particles to be easily mixed together with dissolved boron compounds in water which is thickened with cellulose derivatives. Here, easy mixability means that the particles do not settle or agglomerate in the solution, particularly an aqueous solution at room temperature and at an approximately neutral pH value.

Organic fibre material which forms the bulk (over 50 weight-%, especially approximately 55-90 weight-%) of the mass of the thermal insulator, most suitably comprises cellulose or lignocellulose-based fibres. These are mainly fibres from wood or annual or perennial plants. Different mixtures of wood fibres and plant fibres are possible, too. The fibres may be sourced directly from raw materials or they can be sourced from mechanical, chemi-mechanical or chemical defibring.

Particularly, the organic fibre material comprises at least in part aspen which does not contain resin. Another preferable fibrous material is spruce, which is treated before or during refining, with alkaline sodium sulphite treatment, which is one of the standard treatments when manufacturing paper stock by using a chemi-mechanical method.

It is known that spruce has long fibres and aspen short fibres. According to a preferable embodiment, the fibre material of thermal insulation comprises a combination of the two types, the ratio of spruce to aspen being 20 : 80...80 : 20 %. A composition such as this is advantageous for inhibiting the air flow inside the insulator.

Typically, the fibres are refined or defibred in ways which are known per se into a fibre material that is sufficiently fine that at least 20 % of the fibres are finer than 200 mesh. Generally, the fibres are approximately 0.1-5 mm long (= their average length), and especially at least 20, and, most suitably, at least 30 volume-%, more preferably 50 volume-%, and typically 60-90 volume-%, of the wood fibre length is within the said range.

According to our observations, no benefit is gained from refining the wood fibre all the way to the fineness of the basic fibre of wood, instead it is advantageous to leave it partly as micro chips. In this case, a separate binding fibre is required, because not enough hydrogen bonds of the wood material are created. What happens instead is that long micro chips bind easily with the polymer fibre, in which case not very much of the polymer fibre is needed.

Preferably, and in contrast to what is the case in paper-making, the wood material is not screened or graded after the defibring. According to this preferable embodiment, an economically and technically advantageous result is achieved by leaving the long slivers among the rest of the fibre material. They more effectively bind together the other fibre material and interact better with the polymeric binding fibres, thus less quantity is needed.

As pointed out at the beginning, aspen is an almost odourless wood material. Spruce can be used for the same purpose as aspen, too, if it is treated in such a way that its odour is minimised. One example of such treatments is alkaline chemical treatment applied either before or during the defibring. Another example, in cases where insulating sheets are being manufactured, is the application of heat in order to melt the surface of the polymer fibres, a treatment which considerably decreases the odour of the spruce.

According to the present invention, a fibre composition is generated which is suitable for thermal insulation of buildings, particularly timber-framed buildings. It is also possible to heat the fibre composition and shape it either during or before the heating into flat or concave forms.

### Example:

Aspen wood was refined in a conical refiner at a humidity of 50 % in such a way that the energy consumption was 150 kWh/tonne of dry fibre. 5 % of dry coated polyethylene terephthalate fibre, the trade name of which is BiCo (Trevira 254, length 50 mm and thickness 4.4 dtex, according to the manufacturer), was mixed in a disc refiner, at a low energy consumption of approximately 200 kWh/tonne.

An aqueous solution was separately prepared, comprising 15 weight-% of a mixture of boric acid and sodium tetraborate (5 crystal water molecules) at a ratio of 8 : 7, the quantity of the solution being 100 parts per weight/100 parts per weight of dry fibre. 2.5 % of PCC, having an average particle size of 5 µm, and 0.5 % of methyl cellulose (Methocell 327/supplier: Dow Europa GmbH) were added to this aqueous solution, in which case the viscosity of the aqueous solution was 5000 mPas. The percentages represent the parts per weight of the components in the final suspension.

The aqueous solution prepared was mixed into a dry fibre mixture, between two rotating plates, after which the fibre mass was shaped into the form of a desired insulation sheet and dried in a mould at a temperature of 125 °C, during which process the water evaporated and the surface layer of the BiCo fibres melted.

## Claims

1. Natural-fibre based thermal insulator, which is intended for thermal insulation of buildings and which comprises fibre material composed of organic fibres and synthetic binding fibres, and boron-bearing flame retardants and mould retardants, **characterized in that** the fibre material, which is composed of synthetic binding fibre, contains at least two polymer materials, which melt at different temperatures, the average length of the binding fibre being at least 30 mm, and said binding fibres being at least 10 times longer on average than the organic fibres, and which binding fibres are curved and curly before mixed into the fibres, and which binding fibres are straightened to at least double their length when they are stretched.

2. The thermal insulator according to Claim 1, **characterized in that** the average length of the binding fibre is approximately 30-50 mm.

3. The thermal insulator according to Claim 1 or 2, **characterized in that** the binding fibre is a two-component polymer fibre, which comprises a polymer core that is coated with another polymer material, in which case the melting point of the surface layer is approximately 110-160 °C, and that of the polymer core at least approximately 200 °C, in particular the polymer core comprises thermoplastic, such as polyolefin or polyester or polyamide.

4. A thermal insulator according to any of the preceding claims, **characterized in that** it comprises alkaline earth metal carbonate, the percentage of which is approximately 0.1-5 % of the total weight of the insulator, and in particular the carbonate mineral particles are bound to the insulating material, the particles being in a molten state, on the surface of the fibres.

5. The thermal insulator according to Claim 4, **characterized in that** the alkaline earth metal carbonate is calcium carbonate, magnesium carbonate or a mixture thereof.

6. A thermal insulator according to Claim 4 or 5, **characterized in that** the carbonate particles are bound to the fibrous material with the aid of water-soluble polysaccharide polymers, such as carboxymethyl cellulose, methyl cellulose, ethyl cellulose, hydroxymethyl cellulose, or a mixture of two or more of such polymers; or the carbonate mineral particles are bound to the fibrous material with the aid of an emulsion polymer, such as polyvinyl acetate, styrene-butadiene latex or another latex which is emulsifiable in water.

7. A thermal insulator according to any of Claims 4 to 6, **characterized in that** the carbonate material is precipitated as calcium carbonate, either as single particles or as an agglomerate of them.

8. A thermal insulator according to any of the preceding claims, **characterized in that** the organic fibres comprise wood fibres or cellulose fibres, in particular the organic fibres are derived from aspen or spruce or a mixture thereof, which fibres are refined or defibred in ways which are known per se to form a fibre material that is sufficiently fine that at least 20 % of the fibres are finer than 200 mesh.

9. A thermal insulator according to any of the preceding claims, **characterized in that** it comprises approximately 1-30 weight-%, most suitably approximately 5-15 weight-% of boron-bearing materials, particularly it comprises for instance borax and boric acid in such quantities and such proportions that the pH value of an aqueous solution of the boron-bearing materials is in the range of 7.9-8.2.

10. A method of manufacturing a thermal insulator according to any of Claims 1-9, according to which method
- a composition is formed, which comprises organic fibres and a fibre material that contains synthetic binder fibre, and a boron-bearing flame retardant and mould retardant,
**characterized by**
- using as the fibre material, which is formed by synthetic binding fibres, fibres, which contain at least two polymer materials which melt at different temperatures, the average length of the binding fibre being 30-50 mm and which fibres are curved or curly.

11. The method according to Claim 10, **characterized in that** the length of the binding fibres when they are extended is on average at least 10 times that of the organic fibres, in particular wood or cellulose fibres.

12. The method according to Claim 10 or 11, **characterized in that** the binding fibre is a two-component polymer fibre, which comprises a polymer core that is coated with another polymer material, in which case the melting point of the surface layer is approximately 110-160 °C and that of the polymer core at least approximately 200 °C, in particular the polymer core comprises thermoplastic, such as polyolefin or polyester or polyamide.

13. A method according to any of Claims 10-12, **characterized in that** sufficient alkaline earth metal carbonate is added into the composition to render its percentage approximately 0.1-5.0 % of the total weight of the composition, in particular calcium carbonate, magnesium carbonate or a mixture thereof, or dolomite, is used as the alkaline earth metal carbonate.

14. A method according to any of Claims 10-13, **characterized in that** the alkaline earth metal carbonate is bound to the fibres with the aid of a water-soluble polysaccharide polymer or a water-soluble or water-dispersible synthetic polymer, or by melting the surface of the synthetic fibres.

15. A method according to any of Claims 10-14, **characterized in that** the fibre composition is heated and, either during or before heating, it is shaped into flat or concave forms.

## Patentansprüche

1. Thermischer Isolator auf Naturfaserbasis, welcher für die thermische Isolierung von Gebäuden gedacht ist und welcher Fasermaterial umfasst, das aus organischen Fasern und synthetischen Bindefasern sowie borhaltigen Flammschutzmitteln und Schimmelhemmern zusammengesetzt ist, **dadurch gekennzeichnet, dass** das Fasermaterial, das aus synthetischen Bindefasern zusammengesetzt ist, mindestens zwei Polymermaterialien enthält, welche bei verschiedenen Temperaturen schmelzen, wobei die durchschnittliche Länge der Bindefaser mindestens 30 mm beträgt und die Bindefasern im Durchschnitt mindestens 10-mal länger als die organischen Fasern sind und wobei die Bindefasern gekrümmt und gekräuselt sind, bevor sie in die Fasern gemischt werden, und wobei die Bindefasern auf mindestens ihre doppelte Länge begradigt werden, wenn sie gestreckt werden.

2. Der thermische Isolator nach Anspruch 1, **dadurch gekennzeichnet, dass** die durchschnittliche Länge der Bindefaser ca. 30 - 50 mm beträgt.

3. Der thermische Isolator nach Anspruch 1 oder 2, **dadurch gekennzeichnet, dass** die Bindefaser eine Zwei-Komponenten-Polymerfaser ist, welche einen Polymerkern umfasst, der mit einem anderen Polymermaterial überzogen ist, wobei der Schmelzpunkt der Oberflächenschicht ca. 110 - 160 °C beträgt und der des Polymerkerns mindestens ca. 200 °C beträgt, insbesondere der Polymerkern einen Thermoplasten, wie zum Beispiel Polyolefin oder Polyester oder Polyamid, umfasst.

4. Ein thermischer Isolator nach einem der vorhergehenden Ansprüche, **dadurch gekennzeichnet, dass** er Erdalkalimetallcarbonat umfasst, dessen Prozentsatz ca. 0,1 - 5% des Gesamtgewichts des Isolators beträgt, und insbesondere die Carbonatmineralteilchen an das Isoliermaterial auf der Oberfläche der Fasern gebunden sind, wobei die Teilchen in einem geschmolzenen Zustand vorliegen.

5. Der thermische Isolator nach Anspruch 4, **dadurch gekennzeichnet, dass** das Erdalkalimetallcarbonat Calciumcarbonat, Magnesiumcarbonat oder ein Gemisch davon ist.

6. Ein thermische Isolator nach Anspruch 4 oder 5, **dadurch gekennzeichnet, dass** die Carbonatteilchen an das Fasermaterial mit Hilfe von wasserlöslichen Polysaccharidpolymeren, wie zum Beispiel Carboxymethylcellulose, Methylcellulose, Ethylcellulose, Hydroxymethylcellulose oder einem Gemisch aus zwei oder mehreren solcher Polymeren, gebunden sind; oder die Carbonatmineralteilchen an das Fasermaterial mit Hilfe eines Emulsionspolymers, wie zum Beispiel Polyvinylacetat, Styrol-Butadien-Latex oder eines anderen Latex, der in Wasser emulgierbar ist, gebunden sind.

7. Ein thermischer Isolator nach einem der Ansprüche 4 bis 6, **dadurch gekennzeichnet, dass** das Carbonatmaterial als Calciumcarbonat, entweder als einzelne Teilchen oder als ein Agglomerat aus ihnen, abgeschieden ist.

8. Ein thermischer Isolator nach einem der vorhergehenden Ansprüche, **dadurch gekennzeichnet, dass** die organischen Fasern Holzfasern oder Cellulosefasern umfassen, insbesondere die organischen Fasern von Espe oder Fichte oder einem Gemisch davon abstammen, wobei die Fasern durch Verfahren verfeinert oder zerfasert sind, die für die Bildung eines Fasermaterials, das ausreichend fein ist, so dass mindestens 20 % der Fasern feiner als 200 Mesh sind, per se bekannt sind.

9. Ein thermischer Isolator nach einem der vorhergehenden Ansprüche, **dadurch gekennzeichnet, dass** er c.a. 1 - 30 Gew.-%, am geeignetsten ca. 5 - 15 Gew.-%, an borhaltigen Materialien umfasst, insbesondere er zum Beispiel Borax und Borsäure in solchen Mengen und solchen Anteilen umfasst, dass der pH-Wert einer wässrigen Lösung der borhaltigen Materialien im Bereich von 7,9 - 8,2 liegt.

10. Ein Verfahren zur Herstellung eines thermischen Isolators nach einem der Ansprüche 1 - 9, wobei gemäß dem Verfahren
- eine Zusammensetzung gebildet wird, welche organische Fasern und ein Fasermaterial, das synthetische Bindefasern enthält, sowie ein borhaltiges Flammschutzmittel und Schimmelhemmer umfasst,
**gekennzeichnet durch**
- Verwenden als das Fasermaterial, welches aus synthetischen Bindefasern gebildet ist, Fasern, welche mindestens zwei Polymermaterialien enthalten, die bei unterschiedlichen Temperaturen schmelzen, wobei die durchschnittliche Länge der Bindefaser 30 - 50 mm beträgt und wobei die Fasern gekrümmt oder gekräuselt sind.

11. Das Verfahren nach Anspruch 10, **dadurch gekennzeichnet, dass** die Länge der Bindefasern, wenn sie ausgezogen werden, im Durchschnitt mindestens das 10-fache der der organischen Fasern, insbesondere der Holz- oder Cellulosefasern, beträgt.

12. Das Verfahren nach Anspruch 10 oder 11, **dadurch gekennzeichnet, dass** die Bindefaser eine Zwei-Komponenten-Polymerfaser ist, welche einen Polymerkern umfasst, der mit einem anderen Polymermaterial beschichtet ist, wobei der Schmelzpunkt der Oberflächenschicht ca. 110 - 160 °C beträgt und der des Polymerkerns mindestens ca. 200 °C beträgt, insbesondere der Polymerkern einen Thermoplasten, wie zum Beispiel Polyolefin oder Polyester oder Polyamid, umfasst.

13. Ein Verfahren nach einem der Ansprüche 10 - 12, **dadurch gekennzeichnet, dass** genügend Erdalkalimetallcarbonat der Zusammensetzung zugegeben wird, damit sein Prozentsatz ca. 0,1 - 5,0 % des Gesamtgewichts der Zusammensetzung beträgt, wobei insbesondere Calciumcarbonat, Magnesiumcarbonat oder ein Gemisch davon, oder Dolomit als das Erdalkalimetallcarbonat verwendet wird.

14. Ein Verfahren nach einem der Ansprüche 10 - 13, **dadurch gekennzeichnet, dass** das Erdalkalimetallcarbonat mit Hilfe eines wasserlöslichen Polysaccharidpolymers oder eines wasserlöslichen oder wasserdispergierbaren synthetischen Polymers oder durch Schmelzen der Oberfläche der synthetischen Fasern an die Fasern gebunden wird.

15. Ein Verfahren nach einem der Ansprüche 10 - 14, **dadurch gekennzeichnet, dass** die Faserzusammensetzung erwärmt und, entweder während oder vor dem Erwärmen, in flache oder konkave Formen geformt wird.

## Revendications

1. Isolant thermique à base de fibres naturelles, qui est destiné à l'isolation thermique d'immeubles et qui comprend un matériau fibreux constitué de fibres organiques et de fibres de liaison synthétiques, et des retardateurs de flamme et des retardateurs de moisissure contenant du bore, **caractérisé en ce que** le matériau fibreux, qui est constitué d'une fibre de liaison synthétique, contient au moins deux matériaux polymères, qui fondent à différentes températures, la longueur moyenne de la fibre de liaison étant d'au moins 30 mm et lesdites fibres de liaison étant au moins 10 fois plus longues en moyenne que les fibres organiques, et les fibres de liaison sont courbées et frisées avant d'être mélangées dans les fibres et les fibres de liaison sont redressées à au moins le double de leur longueur lorsqu'elles sont étirées.

2. Isolant thermique selon la revendication 1, **caractérisé en ce que** la longueur moyenne de la fibre de liaison est d'environ 30 à 50 mm.

3. Isolant thermique selon la revendication 1 ou 2, **caractérisé en ce que** la fibre de liaison est une fibre polymère à deux composants, qui comprend une âme polymère qui est revêtue d'un autre matériau polymère, auquel cas le point de fusion de la couche superficielle est d'environ 110 à 160°C et celui de l'âme polymère est d'au moins environ 200°C, en particulier l'âme polymère comprend un matériau thermoplastique tel qu'une polyoléfine ou un polyester ou un polyamide.

4. Isolant thermique selon l'une quelconque des revendications précédentes, **caractérisé en ce qu'**il comprend un carbonate de métal alcalino-terreux, dont le pourcentage est d'environ 0,1 à 5 % du poids total de l'isolant, et en particulier les particules minérales de carbonate sont liées au matériau isolant, les particules étant dans un état fondu, à la surface des fibres.

5. Isolant thermique selon la revendication 4, **caractérisé en ce que** le carbonate de métal alcalino-terreux est le carbonate de calcium, le carbonate de magnésium ou un mélange de ceux-ci.

6. Isolant thermique selon la revendication 4 ou 5, **caractérisé en ce que** les particules de carbonate sont liées au matériau fibreux à l'aide de polymères de polysaccharide solubles dans l'eau, tels que la carboxyméthylcellulose, la méthylcellulose, l'éthylcellulose, l'hydroxyméthylcellulose ou un mélange de deux de ces polymères ou plus ; ou les particules minérales de carbonate sont liées au matériau fibreux à l'aide d'un polymère en émulsion, tel que le poly(acétate de vinyle, un latex styrène-butadiène ou un autre latex qui est émulsifiable dans l'eau.

7. Isolant thermique selon l'une quelconque des revendications 4 à 6, **caractérisé en ce que** le matériau de carbonate est précipité sous forme de carbonate de calcium, sous forme de particules simples ou d'un agglomérat de celles-ci.

8. Isolant thermique selon l'une quelconque des revendications précédentes, **caractérisé en ce que** les fibres organiques comprennent des fibres de bois ou des fibres de cellulose, en particulier les fibres organiques sont dérivées de tremble ou d'épicéa ou d'un mélange de ceux-ci, fibres qui sont raffinées ou défibrillées de manières connues en soi pour former un matériau fibreux qui est suffisamment fin pour qu'au moins 20 % des fibres soient plus fines que 200 mesh.

9. Isolant thermique selon l'une quelconque des revendications précédentes, **caractérisées en ce qu'**il comprend environ 1 à 30 % en poids, tout particulièrement environ 5 à 15 % en poids, de matériau contenant du bore, en particulier il comprend, par exemple, du borax et de l'acide borique en des quantités telles et en des proportions telles que la valeur de pH d'une solution aqueuse des matériaux contenant du bore soit dans la plage de 7,9 à 8,2.

10. Procédé de fabrication d'un isolant thermique selon l'une quelconque des revendications 1 à 9, procédé selon lequel
- une composition est formée, qui comprend des fibres organiques et un matériau fibreux qui contient une fibre de liaison synthétique, et un retardateur de flamme et un retardateur de moisissure contenant du bore,
**caractérisé par**
- l'utilisation, comme matériau fibreux, qui est formé par les fibres de liaison synthétiques, de fibres qui contiennent au moins deux matériaux polymères qui fondent à des températures différentes, la longueur moyenne de la fibre de liaison étant de 30 à 50 mm et les fibres sont courbées ou frisées.

11. Procédé selon la revendication 10, **caractérisé en ce que** la longueur des fibres de liaison lorsqu'elles sont étirées est en moyenne au moins 10 fois celle des fibres organiques, en particulier des fibres de bois ou de cellulose.

12. Procédé selon la revendication 10 ou 11, **caractérisé en ce que** la fibre de liaison est une fibre polymère à deux composants, qui comprend une âme polymère qui est revêtue d'un autre matériau polymère, auquel cas le point de fusion de la couche superficielle est d'environ 110 à 160°C et celui de l'âme polymère est d'au moins environ 200°C, en particulier l'âme polymère comprend un matériau thermoplastique tel qu'une polyoléfine ou un polyester ou un polyamide.

13. Procédé selon l'une quelconque des revendications 10 à 12, **caractérisé en ce qu'**une quantité suffisante de carbonate de métal alcalino-terreux est ajoutée à la composition pour que son pourcentage soit d'environ 0,1 à 5,0 % du poids total de la composition, en particulier du carbonate de calcium, du carbonate de magnésium ou un mélange de ceux-ci, ou de la dolomite, est utilisé comme carbonate de métal alcalino-terreux.

14. Procédé selon l'une quelconque des revendications 10 à 13, **caractérisé en ce que** le carbonate de métal alcalino-terreux est lié aux fibres à l'aide d'un polymère de polysaccharide soluble dans l'eau ou d'un polymère synthétique soluble dans l'eau ou dispersable dans l'eau, ou par fusion de la surface des fibres synthétiques.

15. Procédé selon l'une quelconque des revendications 10 à 14, **caractérisé en ce que** la composition fibreuse est chauffée et, pendant ou après le chauffage, elle est façonnée en formes plates ou concaves.
